# EUROPÄISCHE PATENTSCHRIFT

(11) **EP 1 395 945 B1**
(45) Veröffentlichungstag und Bekanntmachung des Hinweises auf die Patenterteilung: **15.09.2004**
(21) Anmeldenummer: 02738001.3
(22) Anmeldetag: 25.04.2002
(51) Int. Cl.: G06K 9/20, G07C 9/00

(54) **VERFAHREN ZUR FAELSCHUNGSERKENNUNG BEI DER FINGERABDRUCKERKENNUNG UNTER VERWENDUNG EINER TEXTURKLASSIFIKATION VON GRAUWERTDIFFERENZBILDERN**
METHOD FOR DETECTING FALSITY IN FINGERPRINT RECOGNITION BY CLASSIFYING THE TEXTURE OF GREY-TONE DIFFERENTIAL VALUES
PROCEDE DE DETECTION DE FALSIFICATION DANS LA RECONNAISSANCE D'EMPREINTES DIGITALES AU MOYEN D'UNE CLASSIFICATION DE TEXTURE D'IMAGES A VALEURS DE GRIS DIFFERENTIELLES

(30) Priorität: 14.05.2001 DE 10123330
(43) Veröffentlichungstag der Anmeldung: 10.03.2004
(73) Patentinhaber: Infineon Technologies AG, 81669 München (DE)
(72) Erfinder: ENGELS, Angela, Wolfratshausen 82515 (DE); MELZNER, Hanno, Hoehenkirchen 85635 (DE); MORGUET, Peter, München 81829 (DE); WIRTZ, Brigitte, Holzkirchen 83607 (DE)
(74) Vertreter: Stöckeler, Ferdinand, Dipl.-Ing.
(86) Internationale Anmeldenummer: PCT/EP2002/004616
(87) Internationale Veröffentlichungsnummer: WO 2002/093462

(56) Entgegenhaltungen:
- WO-A-01/24700
- US-A- 4 827 527

## Beschreibung

Die vorliegende Erfindung bezieht sich auf ein Verfahren zur Fälschungserkennung bei der Fingerabdruckerkennung unter Verwendung einer Texturklassifikation von Grauwertdifferenzbildern und insbesondere auf ein Verfahren zur Fälschungserkennung bei der Fingerabdruckerkennung auf der Grundlage einer Bildsequenz. Insbesondere bezieht sich die vorliegenden Erfindung auf ein dynamisches, Software-basiertes Verfahren zur Fälschungserkennung.

Die Fingerabdruckerkennung ist eine zuverlässige und weit verbreitete Technik zur Personenidentifikation. Im Stand der Technik sind verschiedene Verfahren zur Erkennung von Fingerabdrücken bekannt, wobei zunächst die einfachen Bilderkennungsverfahren zu nennen sind, die bei Auflegen eines Fingers ein Bild desselben erfassen und mit abgespeicherten Bildern vergleichen, um eine Person zu identifizieren.

Der Nachteil dieser Verfahren besteht darin, dass diese recht leicht zu täuschen sind, beispielsweise durch das Auflegen eines Silikonabgusses einer Fingerkuppe oder ähnlichem. Ferner ist bei diesen Verfahren der große Speicherbedarf für die verwendeten Vergleichsbilder ("Templates") sowie der große Rechenaufwand nachteilhaft. Der Nachteil der leichten Täuschung existiert auch bei minutien-basierten Verfahren.

Zur Lösung dieser Problematik wurde im Stand der Technik vorgeschlagen, Merkmale aus den Fingerabdrücken zu extrahieren und die Erkennung auf der Grundlage dieser Merkmale durchzuführen. Bekannte biometrische Verfahren für die Personenerkennung können beispielsweise in automatisierten Systemen implementiert werden. Solche Systeme verarbeiten die Eingabedaten, die die biometrischen Merkmale enthalten, und extrahieren charakteristische Merkmale, die anschließend einer Person zugeordnet werden können.

Für eine zuverlässige Personenzuordnung ist jedoch sicherzustellen, dass auf dem Signalpfad zwischen dem zu messenden Objekt und der Bildaufnahmeeinheit keine Manipulation möglich ist.

Bei der Erkennung von Fingerabdrücken durch ein automatisches System zur Fingerabdruckerkennung sind also Verfahren erforderlich, die nur von echten Fingern erzeugte Bilder zu der Verarbeitungseinheit weiterleiten und eventuell die von Imitaten stammenden Bilder zurückweisen.

Im Stand der Technik bekannte Ansätze zur Lösung dieser Problematik werden nachfolgend kurz erläutert, wobei hier zwischen Hardware-basierten Lösungen und Software-basierten Lösungen unterschieden wird.

Eine erste Lösung besteht darin, den Sensor, mittels dem der Fingerabdruck zu erfassen ist, um integrierte oder externe Hardware-Komponenten zu ergänzen. Solche bekannten Lösungen erfassen beispielsweise eine Impedanz der aufliegenden Finger, wie dies im US Patent 5,953,331 näher beschrieben wird. Andere technische Realisierungen von Hardware-basierten Fälschungserkennungen umfassen eine Feuchtigkeitsmessung, eine Pulsmessung und eine Druckmessung.

Neben den Hardware-basierten Lösungen sind auch Lösungen bekannt, bei denen die vom Sensor kommenden Daten zur Fälschungserkennung mittels Software ausgewertet werden. Bei der Software-basierten Fälschungserkennung wird zwischen statischen und dynamischen Verfahren unterschieden.

Bei den statischen Verfahren wird nur ein Bild ausgewertet, üblicherweise jenes, das auch zur Erkennung benutzt wird.

Statische Software-basierte Fälschungserkennungsverfahren basieren beispielsweise auf der Auswertung von Fingerabdruckbildern, die als Bitmap mit Grauwerten vorliegen. Andere Software-basierte, statische Verfahren werten die im Bild sichtbaren Talgdrüsen aus.

Bei den dynamischen Verfahren wird eine Sequenz aufeinanderfolgender Bilder des Sensors, die den Vorgang des Finger-Auflegens beschreiben, verwendet. Eine dynamische Fälschungserkennung erhöht die Erkennungs- und Fälschungssicherheit biometrischer Fingerabdrucksysteme, bei denen zusätzlich z. B. eine Bewegung der Person, ein Druck, mit dem der Finger aufgelegt wird, oder Schweiß auf dem Finger bei der Erkennung herangezogen werden. Andere dynamische Verfahren, z.B. wie veroffenthicht in US, A, 4 827 527 oder WO,A,0124700, entnehmen die entsprechenden Informationen zur Fälschungserkennung aus Sequenzen von Fingerabdruckbildern.

Die oben beschriebene dynamische softwarebasierte Lösung zur Fälschungserkennung, bei der aus Sequenzen von Fingerabdruckbildern entsprechende Informationen zur Fälschungserkennung herausgezogen werden, basiert auf der großflächigen Verformung der Haut und damit des Fingerabdrucks, was als "Makroelastizität" bekannt ist. Der Nachteil der Ausnutzung der Makroelastizität besteht darin, dass sichtbare Unterschiede zwischen Originalfingern und Fälschungen im allgemeinen erst dann erkannt werden können, wenn der Finger oder die Fälschung mit erheblichem Druck aufgelegt werden.

Ausgehend von diesem Stand der Technik liegt der vorliegenden Erfindung die Aufgabe zugrunde, ein verbessertes Verfahren zur Fälschungserkennung zu schaffen, bei dem sicher zwischen einem echten Fingerabdruck und einem gefälschten Fingerabdruck unterschieden werden kann, ohne dass der Abdruck unter Berücksichtigung bestimmter Randparameter, wie z. B. des Anpressdruckes, erzeugt werden muss.

Diese Aufgabe wird durch ein Verfahren gemäß Anspruch 1 gelöst.

Die vorliegenden Erfindung schafft ein Verfahren zur Fälschungserkennung, mit folgenden Schritten:
(a) Erfassen einer Bildsequenz, die eine Mehrzahl von Bildern des zu erkennenden Fingerabdrucks umfasst;
(b) Bilden zumindest eines Differenzbildes aus zwei Bildern der erfassten Bildsequenz;
(c) Erfassen einer Textur in dem zumindest einen Differenzbild; und
(d) Vergleichen der Textur mit einer vorbestimmten Textur, um zu bestimmen, ob die erfasste Bildsequenz von einem echten Finger oder von einem Imitat stammt.

Der vorliegenden Erfindung liegt die Erkenntnis zugrunde, dass die in einer Bildsequenz sichtbare Bewegungscharakteristik beim Fingerauflegen zu einem erheblichen Teil durch die Elastizität des Fingers, insbesondere der Haut, bedingt ist. Hierbei werden die nachfolgend genannten zwei Arten von Elastizität unterschieden.

Zum einen existiert die bereits oben erwähnte Makroelastizität, die die großflächige Verformung der Haut und damit des Fingerabdrucks beschreibt, und die die oben erwähnten Nachteile mit sich bringt. Demgegenüber steht die "Mikroelastizität", die die Verformung der Fingerlinien beim einfachen Auflegen des Fingers, beispielsweise auf eine Sensoreinheit, beschreibt.

Originalfinger und gefälschter Finger ("Fälschung") unterscheiden sich sowohl in der Mikro- als auch in der Makroelastizität, die beide in einer Bildsequenz des Auflegvorgangs sichtbar sind und zur Fälschungserkennung durch den erfindungsgemäßen Bildverarbeitungsalgorithmus analysiert werden. Bei der Erfassung der Makroelastizität kann beispielsweise ein Linienwachstum der Fingerlinien erfasst werden.

Sichtbare Unterschiede zwischen Originalfingern und Fälschungen ergeben sich für die Makroelastizität erst dann, wenn Finger oder Fälschung mit erheblichen Druck aufgelegt werden. Um diesen Nachteil zu vermeiden und um sicherzustellen, dass eine Bildsequenz ohne Mitwirkung der zu identifizierenden Person erfolgt, nämlich nur durch das einfache Auflegen des Fingers, hat die vorliegende Erfindung erkannt, dass dies durch eine Analyse der Mikroelastizität erreicht werden kann.

Die Mikroelastizität zeigt sich in der zeitlichen Veränderung der Fingerlinien beim Auflegen. Hierbei ist zu beobachten, dass die Fingerlinien vom originalen Finger beim Auflegen sowohl breiter als auch dunkler werden, was bei gefälschten Fingern nicht im gleichen Maß der Fall ist.

Der Vorteil der vorliegenden Erfindung besteht darin, dass die Betrachtung der Mikroelastizität es ermöglicht, auf sichere Weise zwischen Bildsequenzen von Originalfingern und Fälschungen zu unterscheiden, da die Mikroelastizität eine wesentliche und schwer fälschbare Eigenschaft ist.

Gemäß der vorliegenden Erfindung wird eine Texturklassifikation von Grauwertdifferenzbildern von zeitlich aufeinanderfolgenden Bildern einer Bildsequenz durchgeführt. Anhand des Klassifikationsergebnisses lässt sich eine Fälschung von einem Original unterscheiden.

Bevorzugte Ausführungsbeispiele der vorliegenden Erfindung werden nachfolgend anhand der beiliegenden Figuren näher erläutert. Es zeigen:
Fig. 1A eine Bildsequenz, die dem erfindungsgemäßen Verfahren zugrunde liegt;
Fig. 1B eine schematische Darstellung einer Sensoreinheit;
Fig. 2A und 2B ein Flussdiagramm, das ein bevorzugtes Ausführungsbeispiel des erfindungsgemäßen Verfahrens darstellt;
Fig. 3 zeigt verschiedene Darstellungen von aufeinanderfolgenden Bildern und entsprechenden Differenzbildern für einen Originalfinger, eine Folienfälschung und eine Hauchfälschung; und
Fig. 4 ein Flussdiagramm, das ein Ausführungsbeispiel einer Texturklassifikation gemäß der vorliegenden Erfindung näher erläutert.

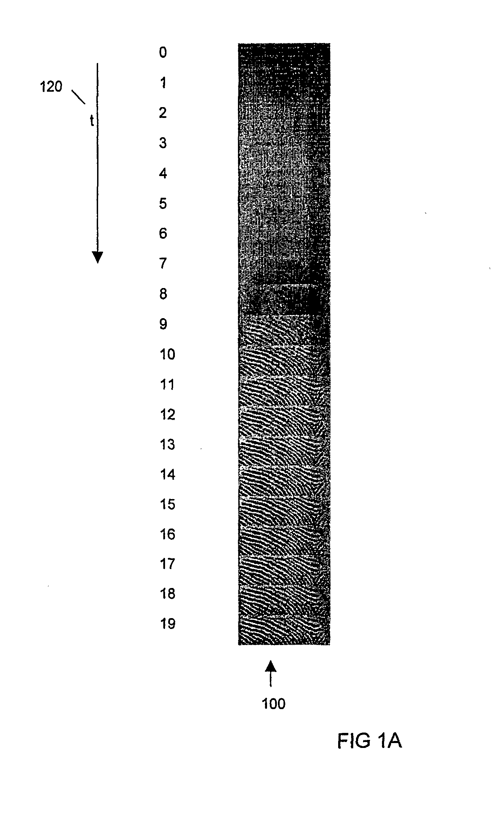

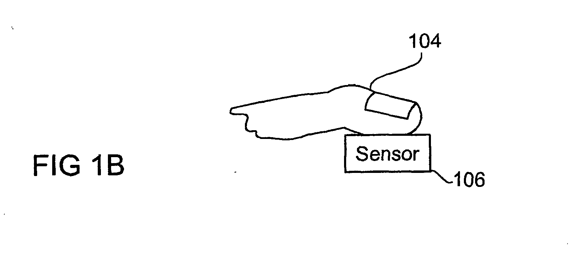

In Fig. 1A ist mit 100 eine beispielhafte Bildsequenz gezeigt, die dem erfindungsgemäßen Verfahren zur Fälschungserkennung von Fingerabdrücken zugrunde liegt. Wie zu erkennen ist, umfasst die Bildsequenz 100 eine Mehrzahl von Einzelbildern 0 bis 19, wobei die Einzelbilder 0 bis 19 in der Bildsequenz 100 zeitlich aufeinander folgen, wie durch den Pfeil 102 dargestellt ist. Die Bildsequenz 100 enthält vorzugsweise Einzelbilder als Bitmaps mit Grauwerten. Die Bildsequenz 100 wird während des Auflegens eines Fingers 104, wie in Fig. 1B gezeigt ist, durch eine Sensoreinheit 106 erfasst. Es ist darauf hinzuweisen, dass die Bildsequenz 100 nicht während des Aufliegens des Fingers auf der Sensoreinheit 106 sondern beim Auflegen des Fingers 104 auf den Sensor 106 erfasst wird, wie auch aus den Einzelbildern 0 bis 19 zu erkennen ist. Genauer gesagt zeigen die Bilder 0 bis 6 überhaupt keinen Finger und erst ab dem Bild 7 ist zu erkennen, dass sukzessive immer größere Flächen des Bildes vom Finger bedeckt sind.

Wenn die Bilder einer Bildsequenz von einem echten Finger stammen, vergrößert sich die Auflagefläche während des Auflegevorgangs über mehrere Bilder. Wenn die Bilder der Bildsequenz von einer Fälschung stammen, erscheint der Fingerabdruck ohne Übergang gleich mit der vollen Auflagefläche. Ferner ändert sich bei den echten Fingern in den Bildern nach dem Sichtbarwerden noch der Kontrast und die Breite der Fingerlinien. Bei einer Fälschung bleibt beides in den Bildern weitgehend unverändert. Die gerade erwähnten Effekte resultieren aus der unterschiedlichen Elastizität von Finger und Fälschung.

Gemäß einem bevorzugten Ausführungsbeispiel der vorliegenden Erfindung wird aus einer Sequenz von Grauwertbildern, die den zu erkennenden Fingerabdruck aufweisen, zunächst eine Sequenz von Differenzbildern berechnet, indem jeweils zwei aufeinanderfolgende Bilder der Sequenz Pixelweise voneinander subtrahiert werden. In den Differenzbildern sind zu geeigneten Zeitpunkten in der Bildsequenz, vor allem zum Zeitpunkt des ersten Kontakts zwischen dem Finger 104 und dem Sensor 106 (siehe Fig. 1B), unterschiedliche Texturen zu erkennen, je nach dem, ob die Bildsequenz von einem Originalfinger oder von einer Fälschung stammt. Dies spiegelt die unterschiedliche Mikroelastizität von Finger und Fälschungsmaterialien wieder. Anhand einer Texturklassifikation der Grauwertdifferenzbilder wird bestimmt, ob die Sequenz von einem Originalfinger oder von einer Fälschung stammt.

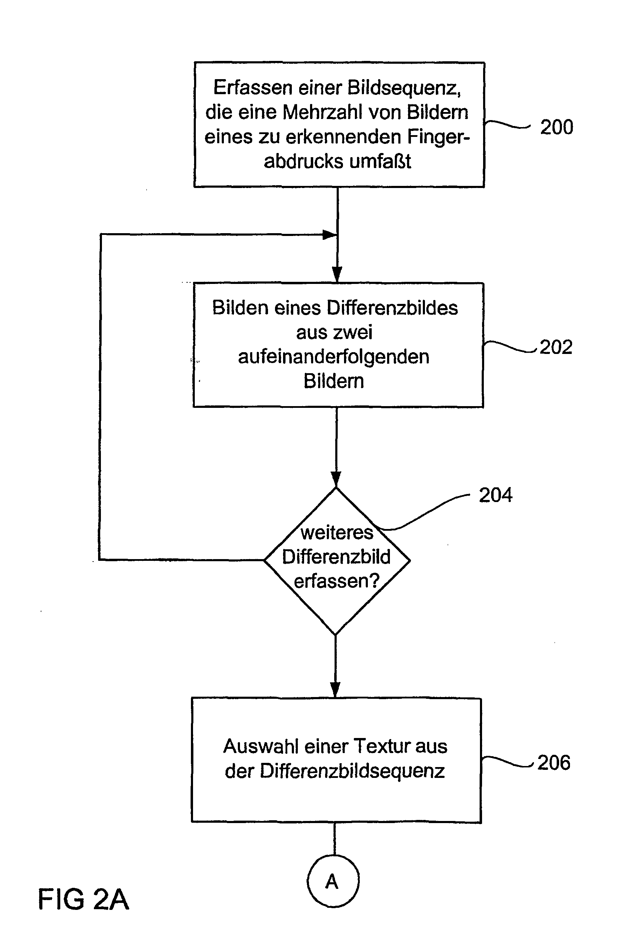

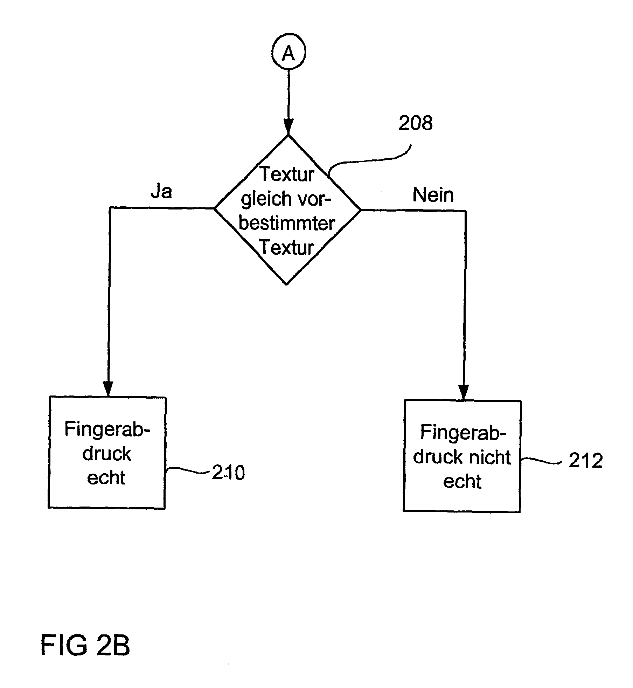

Anhand der Fig. 2 wird nachfolgend ein erstes bevorzugtes Ausführungsbeispiel der vorliegenden Erfindung näher erläutert. Aus der erfassten Bildsequenz wird immer eine Differenzbildsequenz erzeugt. Aus dieser Differenzbildsequenz muss ein besonders charakteristisches Differenzbild herausgesucht werden. Dazu werden in aufsteigender Folge der Differenzbildsequenz zunächst Gradientenbilder und anschließend die Histogramme der Gradientenbilder berechnet. Von den Histogrammen wird der Schwerpunkt bestimmt. Überschreitet dieser Schwerpunkt eine Schwelle, so wird das entsprechende Histogramm für die nachfolgende Fälschungserkennung herangezogen.

In Fig. 2A ist der Schritt 200 gezeigt, in dem beispielsweise die in Fig. 1A gezeigte Bildsequenz 100 bestehend aus den Bildern 0 bis 19 erfasst wird, die den zu erkennenden Fingerabdruck darstellen. Im nachfolgenden Schritt 202 wird ein Differenzbild aus zwei aufeinanderfolgenden Bildern, beispielsweise durch Pixelweise Subtraktion von zwei aufeinanderfolgenden Grauwertbildern der Bildsequenz erzeugt. Im Schritt 204 wird bestimmt, ob weitere Differenzbilder zu erfassen sind oder nicht. Falls der Schritt 204 bestimmt, dass weitere Differenzbilder zu erfassen sind, kehrt das Verfahren zum Schritt 202 zurück, ansonsten geht das Verfahren zum Schritt 206. Im Schritt 206 wird aus der Differenzbildsequenz eine Textur ausgewählt, die anschließend, wie in Fig. 2B gezeigt ist, in einem Schritt 208 mit einer vorbestimmten Textur verglichen wird. Stimmen die Texturen überein, so geht das Verfahren zum Schritt 210, in dem bestimmt wird, dass der Fingerabdruck echt ist, also die Bildsequenz von einem echten Finger herstammt. Wird im Schritt 208 festgestellt, dass die Texturen nicht gleich sind, so wird im Schritt 212 festgestellt, dass der Fingerabdruck nicht echt ist, die Bildsequenz also von einer Fälschung stammt.

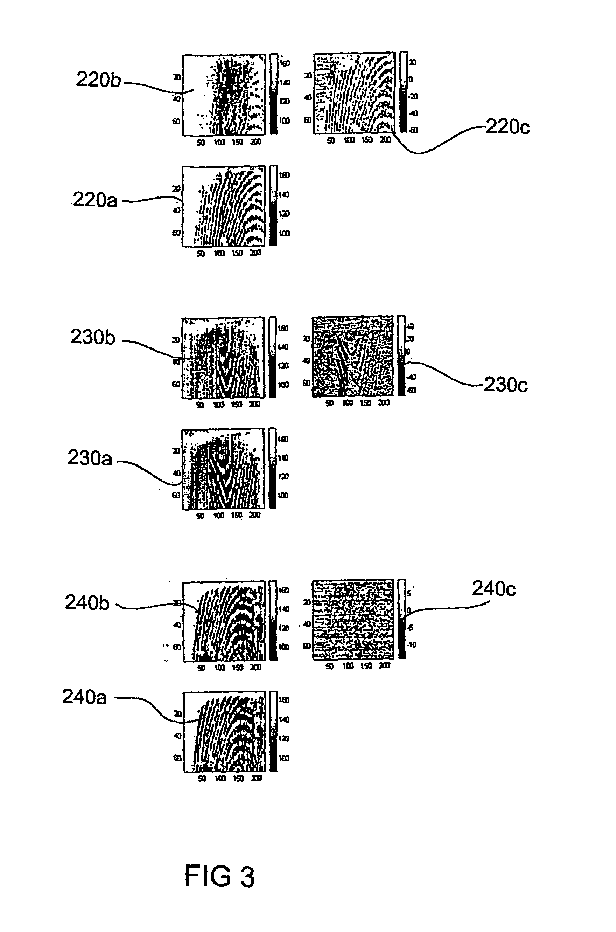

Die oben beschriebene Erzeugung von Differenzbildern im zweiten Schritt 202 wird nachfolgend anhand der Fig. 3 nochmals näher erläutert. In Fig. 3 ist ein aktuelles Bild 220a einer Bildsequenz gezeigt, die von einem Originalfinger stammt. Mit 220b ist ein in der Sequenz vorhergehendes Bild bezeichnet. Eine Pixelweise Subtraktion der Bilder 220a und 220b ergibt das Differenzbild 220c.

In Fig. 3 ist ferner ein Bild 230a gezeigt, welches ein aktuelles Bild einer Bildsequenz ist, die von einer Folienfälschung herstammt. 230b bezeichnet das in der Sequenz vorhergehende Bild und das Differenzbild ist mit 230c bezeichnet.

Mit 240a ist ein aktuelles Bild einer Bildsequenz gezeigt, die von einer Hauchfälschung herstammt. Ein vorhergehendes Bild 140b ist gezeigt, das Differenzbild ist mit 240c bezeichnet.

In Fig. 3 sind jeweils Bilder 220a, 220b, 230a, 230b, 240a, 240b gezeigt, die horizontal die volle Auflösung haben (224 Pixel). Vertikal liegt nur ¼ der möglichen Auflösung vor (72 von 288 Pixel). Es wird nur ¼ des Sensorbildes ausgelesen, um so schnelle zeitliche Änderungen in der Bildsequenz sichtbar zu machen (ein Vollbild des Sensors kann in ca. 1/10 Sekunde ausgelesen werden, ein Viertelbild entsprechend 4 mal schneller). Sichtbar ist also jeweils nur der Randbereich der Fingerabdruckbilder. Die Bilder sind aus Darstellungsgründen in vertikaler Richtung gedehnt, so dass die Fingerlinien verzerrt erscheinen.

Die Differenzbilder 220c, 230c, 240c zeigen jeweils das charakteristische Wachstum eines Fingerabdrucks während des Auflegevorgangs.

Beim Originalfinger 220c ist zu erkennen, dass zunächst einmal der Bereich, in dem Fingerlinien zu finden sind, in grober Näherung kreisförmig nach außen hin zunimmt (die Auflagefläche des Fingers nimmt zu). Außerdem ist zu erkennen, dass die einzelnen Fingerlinien breiter werden (sie bekommen im Differenzbild einen dunklen Rand).

Bei der Folienfälschung 230c erweitert sich der Fingerabdruckbereich weitgehend geradlinig, was dem Abrollen der Folie auf dem Sensor entspricht. Außerdem ist kein Wachstum der Fingerlinien (Ridges) zu erkennen (keine Ränder an den Fingerrillen).

Bei der Hauchfälschung 240c sind sowohl kein Wachstum des Fingerabdrucksbereich als auch kein Wachstum einzelner Fingerlinien (Ridges) zu erkennen (das Differenzbild 240c ist nur sehr schwach und gleichmäßig).

Die Differenzbilder 220c, 230c und 240c unterscheiden sich somit deutlich voneinander, so dass anhand derselben eine Unterscheidung zwischen einer Bildsequenz, die von einem Originalfinger herstammt und einer Bildsequenz, die von einer Fälschung herstammt, durchgeführt werden kann.

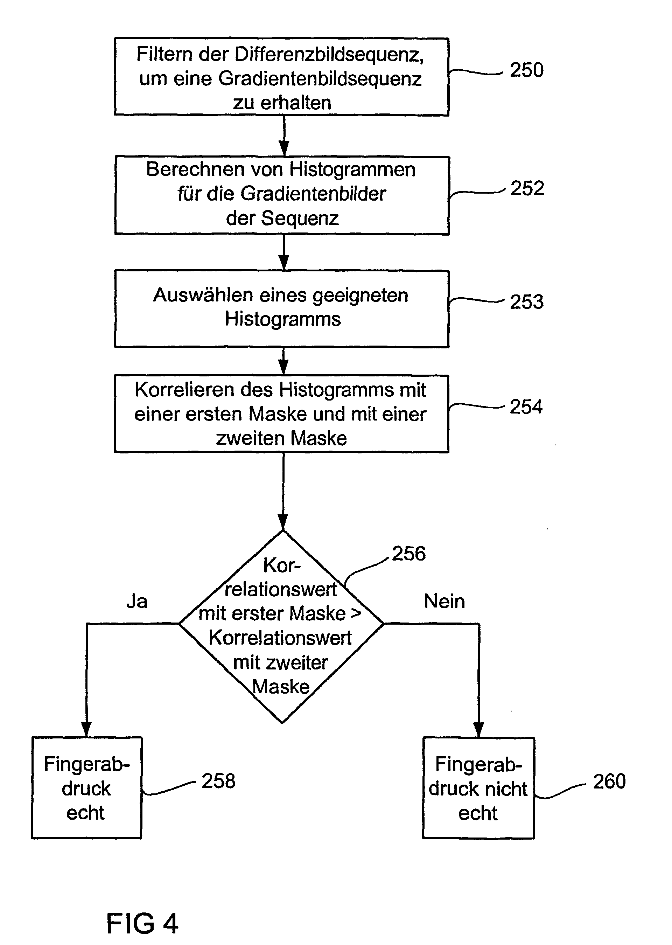

Anhand der Fig. 4 wird nachfolgend ein Beispiel für die Texturklassifikation der erzeugten Grauwertdifferenzbilder näher beschrieben.

Im Schritt 250 wird zunächst die erzeugte Grauwertdifferenzbildsequenz gefiltert, um eine Gradientenbildsequenz zu erhalten. Gemäß einem bevorzugten Ausführungsbeispiel erfolgt die Filterung anhand eines Sobelfilters.

Im nachfolgenden Schritt 252 werden für die erzeugte Gradientenbildsequenz Histogramme für die einzelnen Gradientenbilder berechnet. Im Schritt 253 wird ein geeignetes Histogramm selektiert. Anschließend erfolgt im Schritt 254 eine Korrelation des selektierten Histogramms mit vorgegebenen Masken bzw. Templates, wobei ein erstes Template bzw. eine erste Maske für einen Originalfinger und ein zweites Template bzw. eine zweite Maske für eine Fälschung vorgesehen ist. Im Schritt 256 wird bestimmt, ob ein Wert für die Korrelation mit dem Originalfinger-Template größer als der Wert für die Korrelation mit dem Fälschungs-Template ist. Vorzugsweise erfolgt diese Klassifikation anhand von Bildern und entsprechenden Differenzbildern, die im Zeitpunkt des Auflegens des Fingers erfasst wurden. Wird im Schritt 256 festgestellt, dass der Wert für das erste Template größer ist als der Wert für das zweite Template so wird zum Schritt 256 übergegangen, in dem der Fingerabdruck, ähnlich wie im Schritt 210 als echt klassifiziert wird. Andernfalls wird im Schritt 260 der Fingerabdruck, ähnlich wie im Schritt 212, als nicht echt klassifiziert.

Gemäß einem bevorzugten Ausführungsbeispiel werden die Schritte 254 und 256, also die Korrelation und die anschließende Klassifikation, nur um den Zeitpunkt des Auflegens des Fingers durchgeführt, d. h. nur für die wenigen Bilder in der Sequenz in denen sich die aufeinanderfolgenden Bilder in ihrer Fläche deutlich unterscheiden, also z. B. nur für die Bilder 6 bis 10 in der Bildsequenz 100, die in Fig. 1A gezeigt ist. Gemäß einem weiteren bevorzugten Ausführungsbeispiel werden diese Bilder durch eine Schwerpunktsberechnung im Histogramm bestimmt. Nur dann, wenn der Schwerpunkt einen vorbestimmten Schwellenwert überschreitet, werden die Histogramme der Korrelation und Klassifikation zugeführt. Mit anderen Worten erfolgt zunächst eine vollständige Verarbeitung aller Bilder derart, dass für aufeinanderfolgende Bilder jeweils Differenzbilder erzeugt werden und erst anhand der Histogramme erfolgt dann die tatsächliche Auswahl derjenigen Differenzbilder.die zur Korrelation und Klassifikation herangezogen werden.

Abhängig von dem Ergebnis des erfindungsgemäßen Verfahrens werden dann weitere Schritte eingeleitet oder nicht eingeleitet, z. B. der Zugriff auf geschützte Daten, das Öffnen von Türen und ähnliches. Wird z. B. festgestellt, dass ein Fingerabdruck von einer Fälschung stammt, wird ein Alarm oder ähnliches ausgelöst, um z. B. dem Werkschutz den Versuch eines unberechtigten Eindringens anzuzeigen.

Alternativ kann bei der Feststellung, dass der Fingerabdruck "echt" ist, die erfasste Bildsequenz einer weiteren Verarbeitung zur Personen-Identifizierung zugeführt werden.

### Bezugszeichenliste

- 0-19: Bilder
- 100: Bildsequenz
- 102: Pfeil
- 104: Finger
- 106: Sensoreinheit
- 200-212: Verfahrensschritte
- 220a: aktuelles Bild einer Bildsequenz von einem Originalfinger
- 220b: dem Bild 220a vorhergehendes Bild
- 220c: Differenzbild
- 230a: aktuelles Bild einer Bildsequenz von einer Folienfälschung
- 230b: dem Bild 230 vorhergehendes Bildsequenz
- 230c: Differenzbild
- 240a: aktuelles Bild von einer Bildfolge von einer Hauchfälschung
- 240b: dem Bild 240a vorhergehendes Bild
- 240c: Differenzbild
- 250-260: Verfahrensschritte

## Patentansprüche

1. Verfahren zur Fälschungserkennung, mit folgenden Schritten:
(a) Erfassen (200) einer Bildsequenz (100), die eine Mehrzahl von Bildern (0-19) des zu erkennenden Fingerabdrucks umfasst;
(b) Bilden (202) zumindest eines Differenzbildes aus zwei Bildern der erfassten Bildsequenz (100);
(c) Erfassen (206) einer Textur in dem zumindest einen Differenzbild;
(d) Vergleichen (208) der Textur mit einer vorbestimmten Textur, um zu bestimmen, ob die erfasste Bildsequenz (100) von einem echten Einger oder von einem Imitat stammt.

2. Verfahren nach Anspruch 1, bei dem die Bildsequenz (100) beim Auflegen eines Fingers (104) auf eine Sensoreinheit (106) erzeugt wird und zeitlich aufeinanderfolgende Bilder (0-19) umfasst.

3. Verfahren nach Anspruch 1 oder 2, bei dem die Bilder (0-19) der erfassten Bildsequenz (100) als Grauwertbilder erfasst werden.

4. Verfahren nach einem der Ansprüche 1 bis 3, bei dem eine Mehrzahl von Differenzbildern im Schritt (b) erzeugt wird, indem jeweils zwei aufeinanderfolgende Bilder der Bildsequenz (100) voneinander subtrahiert werden, wobei die zu subtrahierenden Bilder die Bilder sind, die in der erfassten Bildsequenz zum Zeitpunkt des ersten Kontakts zwischen Finger (104) und Sensoreinheit (106) angeordnet sind.

5. Verfahren nach einem der Ansprüche 1 bis 4, bei dem im Schritt (d) die im Schritt (c) erfasste Textur mit einer ersten Textur für einen echten Finger und mit einer zweiten Textur für ein Imitat verglichen wird, um die erfasste Textur zu klassifizieren (254, 256, 258, 260).

6. Verfahren nach einem der Ansprüche 1 bis 5, bei dem der Schritt (d) folgende Schritte umfasst:
(d1) Filtern (250) des Grauwertdifferenzbildes, um ein Gradientenbild zu erhalten,
(d2) Berechnen (252) eines Histogramms des Gradientenbildes;
(d3) Korrelieren (254) des berechneten Histogramms mit einer ersten gegebenen Maske für einen echten Finger und mit einer zweiten gegebenen Maske für ein Imitat, und
(d4) Klassifizieren (256, 258, 260) der erfassten Bildsequenz (100) als von einem echten Finger stammend, wenn der Wert der Korrelation mit der ersten Maske größer ist als der Wert der Korrelation mit der zweiten Maske.

7. Verfahren nach Anspruch 6, bei dem die Schritte (d1) und (d2) für eine Mehrzahl von Differenzbildern durchgeführt werden, wobei das Verfahren vor den Schritten (d3) und (d4) folgende Schritte umfasst:
Berechnen eines Schwerpunkts in jedem Histogramm,
Vergleichen des Schwerpunkts mit einem Schwellenwert, und
Weiterleiten der Histogramme an die Schritte (d3) und (d4), deren Schwerpunkt den Schwellenwert übersteigt.

## Claims

1. Method for forgery recognition, comprising:
(a) capturing (200) an image sequence (100) comprising a plurality of images (0 - 19) of the fingerprint to be recognized;
(b) forming (202) of at least one differential image from two images of the captured image sequence (100);
(c) capturing (206) a texture in the at least one differential image;
(d) comparing (208) the texture with a predetermined texture to determine whether the captured image sequence (100) comes from a real finger or from an imitation.

2. Method according to claim 1, wherein the image sequence (100) is generated during placing of a finger (104) on a sensor unit and comprises images that are consecutive in time.

3. Method according to claim 1 or 2, wherein the images (0 - 19) of the captured image sequence (100) are captured as gray scale images.

4. Method according to one of the claims 1 to 3, wherein a plurality of differential images is generated in step (b) by subtracting two consecutive images of the image sequence (100), respectively, images to be subtracted are those images that are arranged in the captured image sequence at the time of the first contact between finger (104) and sensor unit (106).

5. Method according to one of the claims 1 to 4, wherein in step (d) the texture captured in step (c) is compared with the first texture for a real finger and with a second texture for an imitation in order to classify the captured texture (254, 256, 258, 260).

6. Method according to one of the claims 1 to 5, wherein the step (d) comprises:
(d1) filtering (250) the gray scale differential image to obtain a gradient image,
(d2) calculating (252) a histogram of the gradient image;
(d3) correlating (254) the calculated histogram with a first given mask for a real finger and with a second given mask for an imitation, and
(d4) classifying (256, 258, 260) the captured image sequence (100) as coming from a real finger if the value of the correlation with the first mask is higher than the value of the correlation with the second mask.

7. Method according to claim 6, wherein the steps (d1) and (d2) are carried out for a plurality of differential images wherein the method comprises the following steps before the steps (d3) and (d4):
calculating a centre of gravity in each histogram,
comparing the centre of gravity with a threshold, and
passing on those histograms, whose centre of gravity exceeds the threshold, to the steps (d3) and (d4).

## Revendications

1. Procédé pour détecter une falsification comportant les étapes suivantes :
e) on enregistre (200) une séquence d'images (100) qui comprend une multiplicité d'images (0 à 19) de l'empreinte digitale à reconnaître,
f) on forme (202) au moins une image différentielle à partir de deux images de la séquence d'images (100) enregistrée,
g) on enregistre (206) une texture dans l'image différentielle au moins au nombre d'une et
h) on compare (208) la texture à une texture prédéfinie afin de déterminer si la séquence d'images (100) provient d'un doigt véritable ou d'une imitation.

2. Procédé selon la revendication 1, selon lequel la séquence d'images (100) est produite lorsqu'on applique un doigt (104) sur une unité de détection (106) et comprend des images (1 à 19) qui se succèdent dans le temps.

3. Procédé selon la revendication 1 ou 2, selon lequel les images (0 à 19) de la séquence d'images (100) enregistrée sont enregistrées sous forme d'images à valeurs de gris.

4. Procédé selon l'une des revendications 1 à 3, selon lequel on produit un grand nombre d'images différentielles à l'étape (b) en soustrayant l'une de l'autre respectivement deux images successives de la séquence d'images (100), les images à soustraire étant les images qui se trouvent dans la séquence d'images enregistrée à l'instant du premier contact entre le doigt (104) et l'unité de détection (106).

5. Procédé selon l'une des revendications 1 à 4, selon lequel à l'étape (d) on compare la texture enregistrée à l'étape (c) à une première texture liée à un doigt véritable et à une deuxième texture liée à une imitation afin de classer la texture enregistrée (254, 256, 258, 260).

6. Procédé selon l'une des revendications 1 à 5, selon lequel l'étape (d) comprend les étapes suivantes :
d1) on filtre (250) l'image différentielle à valeurs de gris pour obtenir une image à gradient,
d2) on calcule (252) un histogramme de l'image à gradient,
d3) on corrèle (254) l'histogramme calculé à un premier masque donné pour un doigt véritable et à un deuxième masque donné pour une imitation et
d4) on classe (256, 258, 260) la séquence d'images (100) enregistrée comme provenant d'un doigt véritable si la valeur de la corrélation avec le premier masque est supérieure à la valeur de la corrélation avec le deuxième masque.

7. Procédé selon la revendication 6, selon lequel les étapes (d1) et (d2) sont réalisées sur un grand nombre d'images différentielles, le procédé comprend alors les étapes suivantes préalablement aux étapes (d3) et (d4) :
on calcule un centre de gravité dans chaque histogramme,
on compare le centre de gravité à une valeur seuil,
on transmet aux étapes (d3) et (d4) les histogrammes dont le centre de gravité dépasse la valeur seuil.
